# EUROPÄISCHE PATENTANMELDUNG

(11) **EP 4 796 347 A1**
(43) Veröffentlichungstag der Anmeldung: **26.08.2026**
(21) Anmeldenummer: 26155289.7
(22) Anmeldetag: 30.01.2026
(51) Int. Cl.: B60C 9/00, B60C 9/02, B60C 9/08

(54) **FAHRZEUGREIFEN MIT KARKASSLAGE**

(30) Priorität: 19.02.2025 DE 102025106333
(71) Anmelder: Continental Reifen Deutschland GmbH, 30175 Hannover (DE)
(72) Erfinder: Kranich, Henrik, 30175 Hannover (DE); De Castro Pinho, Daniel, 30175 Hannover (DE)
(74) Vertreter: Continental Corporation

(57) **Zusammenfassung**

Die Erfindung betrifft einen Fahrzeugreifen in Radialbauart mit einer Radialkarkasse und mit zumindest einer Karkasslage aus in Gummi eingebetteten Stahlkorden (1) und mit Wulstbereichen mit Wulstkernen und Kernprofilen, um welche die Karkasslage Hochschläge bildend verläuft, wobei die Stahlkorde jeweils genau drei Filamente (2) umfassen, wobei der Durchmesser (D1) des Stahlkords maximal 0,63 mm beträgt, wobei das im Stahlkord verwendete Stahl ein ultra-high tensile Stahl ist und wobei unter dem Wulstkern die Stahlkorde in der Karkasslage mit mehr als 90 epdm angeordnet sind.

## Beschreibung

Die Erfindung betrifft einen Karkasskord für einen Fahrzeugreifen, eine Karkasse für einen Fahrzeugreifen, die den Kord enthält, und einen Fahrzeugreifen bevorzugt einen Nutzfahrzeugreifen, zum Beispiel für Lastkraftwagen, in Radialbauart mit der Karkasse.

Fahrzeugreifen, insbesondere Nutzfahrzeugreifen, weisen eine Radialkarkasse, insbesondere eine Stahlkordkarkasse, mit zumindest einer Karkasslage aus in Gummi eingebetteten Stahlkorden auf und weiterhin Wulstbereiche mit Wulstkernen und Kernprofilen, um welche die Karkasslage Hochschläge bildend verläuft.

Nutzfahrzeugreifen weisen in der Regel eine Querschnittshöhe von 135 mm bis 400 mm, insbesondere 175 mm bis 240 mm auf.

Nutzfahrzeugreifen weisen weiterhin bevorzugt einen Lastindex von 121 bis 160 auf.

Es ist üblich, in Nutzfahrzeugreifen der eingangs genannten Art - mit einer Querschnittshöhe von 135 mm bis 240 mm und einem Lastindex von 121 bis 160 - die Karkasslage mit Stahlkorden der Konstruktion 3 × 0,20 mm + 9 × 0,175 mm zu verstärken, wobei die Stahlfilamente eine Zugfestigkeit im NT (normal tensile, normale Zugfestigkeit) Bereich von 2700 N/mm2 bis 3050 N/mm2 aufweisen und unter dem Wulstkern mit 65 bis 85 epdm ("Enden pro Dezimeter", auch als "Fadendichte unter dem Wulstkern" oder "Fadendichte unter dem Kern" bezeichnet) angeordnet sind.

Diese Stahlkorde verleihen der Karkasslage gute Festigkeitseigenschaften. Nachteil der Stahlkorde ist jedoch, dass sie eine bestimmte Mindestdicke der Gummierung der Karkasslage erforderlich machen, damit die Stahlkorde stabil in die Gummierung eingebettet werden können. Die Gummierung sollte in etwa 150 % bis 200 % der Dicke bzw. des Durchmessers der verwendeten Stahlkorde aufweisen.

Üblicherweise haben verwendete Korde einen Durchmesser von 0,75 bis 1,0 mm, um die relevante Festigkeit der Karkasslage bzw. des Reifens zu erreichen. Eine entsprechend hohe Gummidicke der Karkasslage geht mit hohem Rollwiderstand einher.

Der Erfindung liegt die Aufgabe zugrunde, Stahlkorde derart auszuführen, dass eine daraus gebildete Karkasslage bzw. ein gebildeter Fahrzeugreifen mit der Karkasslage einen niedrigen Rollwiderstand bei weiterhin ausreichender Festigkeit aufweist.

Die gestellte Aufgabe wird erfindungsgemäß dadurch gelöst, indem Stahlkorde für eine Karkasslage eines Reifens bereitgestellt werden, die drei Filamente aufweisen. Die Stahlkorde weisen dabei einen maximalen Durchmesser von 0,63 mm, bevorzugt von maximal 0,55 mm, besonders bevorzugt von maximal 0,50 mm auf.

Die Filamente können in den Stahlkorden gemäß der Konstruktion 1 + 2 oder 3x angeordnet sein, wobei die Filamente bevorzugt einen Durchmesser von mindestens 0,175 mm aufweisen und bevorzugt einen Durchmesser von maximal 0,29 mm aufweisen. Die Durchmesser der Filamente sind bevorzugt alle gleich.

Aufgrund des geringen Durchmessers der Filamente und der dargestellten Konstruktion resultiert der geforderte geringe Durchmesser der Korde.

Die erfindungsgemäßen Stahlfilamente umfassen ein oder bestehen aus einem Stahl oder Stählen, das oder die eine Zugfestigkeit im UT Bereich, also im ultra-high tensile Bereich (ultra-hohe Zugfestigkeit) von über 3300 N/mm2 (=MPa), bevorzugt über 3500 N/mm2, besonders bevorzugt über 3800 N/mm2 und bevorzugt bis zu 4100 N/mm2 aufweisen. Die verwendeten UT-Stähle sind insbesondere durch einen Kohlenstoffanteil im Stahl von 0,86 % oder höher charakterisiert.

Die neuartige Anwendung von UT-Stählen für Filamente von Karkasskorden ermöglicht die Bereitstellung der vorteilhaft dünnen Korde mit geforderten hohen Zugfestigkeiten.

In einer erfindungsgemäßen Karkasslage sind die erfindungsgemäßen Stahlkorde zur Verstärkung, bevorzugt mit mehr als 90 epdm unter dem Wulstkern, angeordnet. Die erfindungsgemäße hohe Zahl der Korde in der Karkasslage wird durch die erfindungsgemäß bereitgestellten dünnen Korde (geringe Durchmesser) ermöglicht.

Die hohe Zahl der Korde mit jeweils hoher Zugfestigkeit stellt eine ausreichende Festigkeit, Stabilität und Lebensdauer der Karkasse sicher, die aufgrund der geringen Durchmesser der Korde gleichzeitig vorteilhaft dünn ausgeführt sein kann.

Mit dem Korddurchmesser skaliert die benötigte Gummierungsdicke und somit die Gummimenge beim Kalandrieren der Karkasslage. Durch die Verwendung der erfindungsgemäßen Stahlkorde (wie beschrieben) kann die Gummierungsdicke auf unter 2,0 mm, bevorzugt auf unter 1,5 mm, noch bevorzugter auf unter 1,0 mm gesenkt werden, ohne dass sich die Reifeneigenschaften verschlechtern.

Ein erfindungsgemäßer Reifen enthält die erfindungsgemäße Karkasslage.

Es hat sich überraschenderweise herausgestellt, dass eine gegenüber eines Referenzreifens verringerte Gummimenge bzw. Gummidicke in der Karkasslage zu einer Verbesserung des Rollwiderstandsverhaltens des erfindungsgemäßen Reifens gegenüber dem Referenzreifen führt, d.h. der Rollwiderstand sinkt gegenüber dem Referenzreifen.

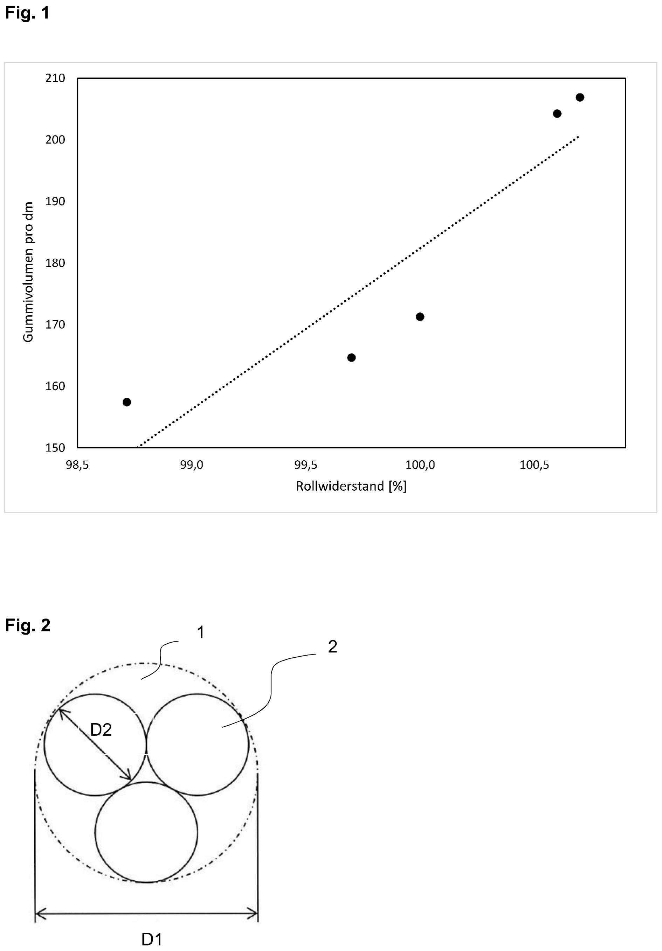

Die Abhängigkeit des Rollwiderstands des Reifens vom Gummivolumen pro dm ("pro dm" bedeutet hier "pro Dezimeter Reifenumfang entlang des Wulstkerns", gemessen in Quadratmillimeter mm² im Reifenquerschnitt) wurde auch empirisch ermittelt und ist im Diagramm in Figur 1 (siehe Figuren) und der zugehörigen Tabelle 1 im Folgenden übersichtlich dargestellt.

**Tabelle 1:**

| Gummivolumen pro dm in mm² | Rollwiderstand bezogen auf Referenzreifen (fett markiert) in % |
|---|---|
| 157 | 98,7 |
| 165 | 99,7 |
| **171** | **100** |
| 204 | 100,6 |
| 207 | 100,7 |

Die erfindungsgemäße Verdünnung der Karkasslage bietet die Möglichkeit das Gummivolumen bzw. die Gummidicke gegenüber Standardreifen zu halbieren, was ein Verbesserungspotential für den Rollwiderstand von bis zu 2 % bietet. Insbesondere kann erfindungsgemäß eine Gummidicke der Karkasslage zwischen 0,7 mm und 1,8 mm, bevorzugt zwischen 0,7 mm und 1,5 mm, bevorzugter zwischen 0,7 mm und 1,3 mm, bzw. zwischen 0,7 mm und 1,2 mm erreicht werden. Bevorzugter beträgt die Gummidicke mindestens 0,9 mm oder mindestens 1 mm.

Ein verringerter Rollwiderstand korreliert vorteilhafterweise auch mit einem geringeren Energieverbrauch durch Reibungsverluste des erfindungsgemäßen Reifens und ermöglicht somit Treibstoffeinsparung.

Weiterhin führt eine verringerte Menge an Gummi zu einer vorteilhaften Reduktion des Gummibedarfs und somit zu geringeren Herstellungskosten und einer höheren Nachhaltigkeit des Reifens.

Die weiteren bevorzugten Merkmale sind nicht einschränkend. Die bevorzugten Merkmale können die Filamente, den Stahlkord, die Karkasse mit dem Stankord oder den erfindungsgemäßen Reifen betreffen.

Besonders bevorzugt ist eine Ausführung der Filamente mit einer Zugfestigkeit von mindestens 3500 N/mm2.

Besonders bevorzugt ist eine Ausführung, bei der die Filamente mit einer Schlaglänge von 10,0 mm bis 16,0 mm, insbesondere von 14 mm, verdreht sind.

Besonders bevorzugt ist eine Ausführung, bei der die drei Filamente jeweils denselben Durchmesser aufweisen. Bevorzugt beträgt der Durchmesser jedes Filaments maximal 0,29 mm, bevorzugter maximal 0,25 mm, noch bevorzugter maximal 0,23 mm, besonders bevorzugt maximal 0,20 mm.

Bevorzugt wird der erfindungsgemäße Stahlkord in der Karkasslage eines Nutzfahrzeugreifens, insbesondere eines LKW-Reifens eingesetzt. Es ist jedoch auch der Einsatz in anderen Fahrzeugreifen, beispielsweise PKW (Personenkraftwagen)-Reifen möglich.

Bei dem LKW-Reifen, in dem der erfindungsgemäße Stahlkord in der Karkasslage eingesetzt wird, handelt es sich bevorzugt um einen Reifen mit Stahlkarkasse, der weiterhin für einen Innendruck zwischen 6 und 10 bar, besonders bevorzugt für mindestens 9 bar Innendruck ausgelegt ist.

Die vorliegende Erfindung kann gemäß eines weiteren Aspekts auch auf Fahrzeugreifen für Personenkraftwagen (PKW) in Radialbauart mit einer Radialkarkasse angewandt werden. Alle zuvor beschriebenen Merkmale gelten analog, sofern sie nicht explizit LKW-Reifen betreffen.

Aufgrund des geringeren Reifen-Innendrucks von PKW-Reifen kann bei PKW-Reifen jedoch eine geringere Anzahl an Stahlkorden verwendet werden als zuvor für LKW-Reifen beschrieben.

Die mindestens benötigten Enden pro Dezimeter (an Stahlkorden) unter dem Wulstkern EPDM_PKW können erfindungsgemäß nach folgender Formel berechnet werden: EPDM_PKW > {[(Innendruck des Fahrzeugreifens) / 9bar] * 90 epdm}.

Weitere Merkmale, Vorteile und Einzelheiten der Erfindung (insbesondere des ersten Aspekts) werden nun anhand der Figur 2, welche schematisch einen Querschnitt einer Ausführungsvariante eines für eine Karkasslage eines Nutzfahrzeugreifens vorgesehenen Stahlkordes zeigt, näher beschrieben.

Der Nutzfahrzeugreifen weist die üblichen Bauteile auf, wie einen profilierten Laufstreifen, einen mehrlagigen, insbesondere mit Stahlkorden verstärkten Gürtelverband, eine Innenschicht, Wulstbereiche mit Wulstkernen und Kernprofilen sowie eine Radialkarkasse aus zumindest einer mit Stahlkorden verstärkten Karkasslage. Die Stahlkorde der Karkasslage verlaufen in den Seitenwänden in radialer Richtung, radial unterhalb des Laufstreifens und des Gürtels in axialer Richtung (also in anderen Worten: näher an der Reifenachse als der Laufstreifen).

Figur 2 zeigt einen Querschnitt eines zum Einsatz in der Karkasslage erfindungsgemäß ausgeführter Nutzfahrzeugreifen besonders geeigneten Stahlkordes 1, welcher die Konstruktion 1 + 2 x0.23 UT oder 3x0.23 UT und dementsprechend drei gleichdimensionierte und umeinander geschlagene Filamente 2 aufweist, wobei bei einer 1+2x0,23 UT Konstruktion, anders als bei der 3x0.23 UT Konstruktion, das zentrale Filament ohne Schlag verarbeitet wird, jedoch nach dem Verseilen einen anteiligen Schlag aufweist.

Der Durchmesser D2 jedes der Filamente beträgt im Beispiel definitionsgemäß 0,23 mm.

Die Filamente 2 sind in bekannter Weise mit einer Schlaglänge von 10,0 mm bis 16,0 mm, vorzugsweise von etwa 14,0 mm, verdrillt.

Die Filamente bestehen aus Stahl der Festigkeitsklassen UT (ultra-high tensile) und weisen eine Zugfestigkeit von mehr als 3300 N/mm2 auf. Bei einer bevorzugten Ausführung weisen die Filamente 2 eine Zugfestigkeit von mindestens 3500 N/mm2 auf.

Die Filamente 2 weisen jeweils einen im Wesentlichen kreisförmigen Querschnitt auf.

Der Gesamtdurchmesser D1 des gebildeten Kords beträgt im Beispiel weniger als 0,50 mm, nämlich z.B. 0,496 mm.

Zur Herstellung einer solche Stahlkorde aufweisenden Karkasslage werden die Stahlkorde durch Kalandrieren in eine der üblichen Gummierungsmischungen eingebettet, wobei in der nicht vulkanisierten kalandrierten Karkasslage die Anzahl der Stahlkorde über 90 epdm beträgt.

Im fertig hergestellten, vulkanisierten Nutzfahrzeugreifen beträgt die Anzahl der Stahlkorde unter dem Wulstkern ebenso über 90 epdm, optional über 100 epdm.

### Bezugszeichenliste

1 Stahlkord
2 Filament
D1 Korddurchmesser
D2 Filamentdurchmesser

## Patentansprüche

1. Fahrzeugreifen in Radialbauart mit einer Radialkarkasse und mit zumindest einer Karkasslage aus in Gummi eingebetteten Stahlkorden (1) und mit Wulstbereichen mit Wulstkernen und Kernprofilen, um welche die Karkasslage Hochschläge bildend verläuft, wobei die Stahlkorde jeweils genau drei Filamente (2) umfassen, wobei der Durchmesser (D1) der Stahlkorde maximal 0,63 mm beträgt, wobei das in den Stahlkorden verwendete Stahl ein ultra-high tensile Stahl ist und wobei unter dem Wulstkern die Stahlkorde in der Karkasslage mit mehr als 90 epdm angeordnet sind.

2. Fahrzeugreifen nach Anspruch 1, wobei der Durchmesser (D2) jedes der Filamente maximal 0,29 mm beträgt.

3. Fahrzeugreifen nach Anspruch 2, wobei der Durchmesser jedes der Filamente maximal 0,25, bevorzugt maximal 0,23 mm, besonders bevorzugt maximal 0,20 mm beträgt.

4. Fahrzeugreifen nach einem der Ansprüche 1 bis 3, wobei der Durchmesser der Stahlkorde maximal 0,55 mm, bevorzugter maximal 0,50 mm beträgt.

5. Fahrzeugreifen nach einem der Ansprüche 1 bis 4, wobei das in den Stahlkorden verwendete Stahl ein ultra-high tensile Stahl ist, das eine Zugfestigkeit von minimal 3300 N/mm2, bevorzugt minimal 3500 N/mm2 aufweist.

6. Fahrzeugreifen nach einem der Ansprüche 1 bis 5, wobei das in den Stahlkorden verwendete Stahl ein ultra-high tensile Stahl ist, das einen Kohlenstoffgehalt von mindestens 0,86 % aufweist.

7. Fahrzeugreifen nach einem der Ansprüche 1 bis 6, wobei die Stahlkorde eine Konstruktion 1 + 2 oder 3x aufweisen.

8. Fahrzeugreifen nach einem der Ansprüche 1 bis 7, wobei der Fahrzeugreifen eine Querschnittshöhe von 135 mm bis 240 mm und einen Lastindex von 121 bis 160 aufweist.

9. Fahrzeugreifen nach einem der Ansprüche 1 bis 8, wobei der Fahrzeugreifen ein Nutzfahrzeugreifen ist.

10. Verwendung von Stahlkorden (1) zur Verstärkung von Karkasslagen von Fahrzeugreifen, die jeweils genau drei Filamente (2) umfassen, wobei der Durchmesser (D1) der Stahlkorde maximal 0,63 mm beträgt, wobei das in den Stahlkorden verwendete Stahl ein ultra-high tensile Stahl ist.

11. Fahrzeugreifen für Personenkraftwagen in Radialbauart mit einer Radialkarkasse und mit zumindest einer Karkasslage aus in Gummi eingebetteten Stahlkorden (1) und mit Wulstbereichen mit Wulstkernen und Kernprofilen, um welche die Karkasslage Hochschläge bildend verläuft, wobei die Stahlkorde jeweils genau drei Filamente (2) umfassen, wobei der Durchmesser (D1) der Stahlkorde maximal 0,63 mm beträgt, wobei das in den Stahlkorden verwendete Stahl ein ultra-high tensile Stahl ist und wobei unter dem Wulstkern die Stahlkorde in der Karkasslage mit einer Anzahl EPDM_PKW angeordnet sind, wobei gilt: $EPDM_PKW > \left\{\left[\left(Innendruck des Fahrzeugreifens\right)/9bar\right]* 90 epdm\right\} .$
